# EUROPEAN PATENT APPLICATION

(11) **EP 2 326 110 A1**
(43) Date of publication of application: **25.05.2011**
(21) Application number: 09176546.1
(22) Date of filing: 19.11.2009
(51) Int. Cl.: H04W 4/06

(54) **BM-SC for broadcasting services through a wireless communication network and/or a digital broadcasting network extension, and associated method**

(71) Applicant: Thomson Licensing, Inc., 92100 Boulogne-Billancourt (FR)
(72) Inventor: Gouache, Stéphane, 92648, Boulogne cedex (FR); Bichot, Guillaume, 92648, Boulogne cedex (FR)
(74) Representative: Ruellan-Lemonnier, Brigitte

(57) **Abstract**

A Broadcast Multicast - Service Centre (BM-SC) is intended for using cellular resources of a wireless communication network (CN, R1, R2, N1, N2) for broadcasting services to wireless communication equipments (E11, E12, E21, E22) of users through first bearer contexts. This Broadcast Multicast - Service Centre (BM-SC) comprises a management means (MM) arranged for determining for each service if it must be broadcast by means of resources of this wireless communication network (CN, R1, R2, N1, N2) and through at least one first bearer context and/or by means of resources of a digital broadcasting network extension of this wireless communication network (CN, R1, R2, N1, N2), that have been allocated to it (BM-SC), and through at least one second bearer context, depending on at least one chosen parameter of a policy and of the coverage of at least this digital broadcasting network extension.

## Description

### Technical field

The present invention relates to the domain of service broadcasting to wireless communication equipments.

One means here by "service" any type of digital information flow allowing to transmit content data and/or signaling information to wireless communication equipments. So, it may be a content distribution, such as television (TV) channel(s), radio channel(s) or a video on demand (or VoD), but also a software delivery service providing games, polls or rich media applications, for instance.

### Background of the invention

As it is known by the man skilled in the art, services may be broadcast to users of wireless communication equipments by means of a wireless communication network, such as a digital terrestrial network or a satellite network, or by means of a digital mobile broadcasting network such as DVB-H and DVB-SH which are used for mobile digital TV. Bidirectional wireless communication networks (such as 3GPP or WiMAX) have defined and implemented a broadcasting service allowing multicast/broadcast within the core network and the (radio) access network. This broadcasting service may be the one called MBMS ("Multimedia Broadcast Multicast Service"), for instance.

Although the MBMS service exists in the (radio) access network, it shares the radio resources with the two ways communications conducting to poor capabilities. A solution has been proposed to associate a wireless broadcasting network with the two ways wireless communication network. More precisely, Motorola has proposed to integrate DVB-H into the UTRAN (UMTS Radio Access Network) as a complementary radio access technology for distributing MBMS in cellular networks. But the DVB-H being integrated transparently at the radio level (UTRAN), there is practically no control from the higher layers and therefore it is a fixed scheme (e.g. service A goes through DVB-H and service B goes through cellular access network) that determines the handoff between DVB-H and cellular network. So, it is neither possible to change, for instance, the service bit rate depending on radio resource availability, nor to implement a different handoff strategy.

Another solution called OMA BCAST has been also proposed recently. It consists in defining a unified service layer usable on top of either MBMS or DVB-H technologies. But, this solution does not allow any mechanism for coupling intelligently a cellular (or more generally wireless) technology and a DVB-H (or more generally broadcast) technology.

### Summary of the invention

So the object of this invention is to improve the situation, and more precisely to allow a controllable cooperation scheme between a wireless technology and a wireless digital broadcast technology.

For this purpose, the invention provides a Broadcast Multicast - Service Centre (hereafter called BM-SC), intended for using cellular resources of a wireless communication network for broadcasting services to wireless communication equipments of users through first bearer contexts, and comprising a management means arranged for determining for each service if it must be broadcast by means of resources of this wireless communication network and through at least one first bearer context and/or by means of resources of a digital broadcasting network extension of this wireless communication network, that have been allocated to the BM-SC, and through at least one second bearer context, depending on at least one chosen parameter of a policy and of the coverage of at least this digital broadcasting network extension.

It is recalled that a "bearer context" is a logical notion that groups service data and signaling. So, the second bearer context groups service data (carried by the digital broadcasting network extension, for instance DVB-H) and signaling (carried by the cellular network) traveling over separate networks. When a service is being served only to the wireless communication network, there is only one "normal" first bearer context initiated by the BM-SC for that service (service data and signaling going through the wireless communication network). When the service is being served only to the digital broadcasting network extension, there is only one second bearer context for that service (service data going through the digital broadcasting network extension and signaling going through the wireless communication network). In this last case the signaling is used to advise the clients to power-on their digital broadcasting network extension receiver and pass the associated transmission parameters. Now if the service is being served simultaneously to the wireless communication network and the digital broadcasting network extension, then there are two bearer contexts setup by the BM-SC.

The BM-SC according to the invention may include additional characteristics considered separately or combined, and notably:
- each parameter may be chosen from a group comprising at least the service requirements, the usual audience of a service, the service broadcasting quality, a class to which belong users interested by a service, the capability of the wireless communication equipments of users interested by a service, the number of users to which a service can be broadcast into at least one coverage area of the digital broadcasting network extension, the number of users to which a service can be broadcast into at least one coverage area of the wireless communication network, the size of at least one coverage area of the digital broadcasting network extension that can be used for broadcasting a service, the size of at least one coverage area of the wireless communication network that can be used for broadcasting a service, and the radio resources available for services in the wireless communication network and/or in the digital broadcasting network extension;
- it may be arranged for allocating a same session identifier (ID) and a same multicast address to a service broadcast by the wireless communication network and the digital broadcasting network extension;
- it may comprise a first control means arranged for transmitting to the wireless communication network i) signalisation information (or signaling) relative to the service to be broadcast to the user wireless communication equipments through the first and/or second bearer contexts, and ii) service data to be broadcast to the user wireless communication equipments through this first bearer context;
- it may comprise a second control means arranged for transmitting to the digital broadcasting network extension service data to be broadcast to user wireless communication equipments through the second bearer context;
- each first bearer context may be identified by a first unique Temporary Mobile Group Identity (or TMGI) and each second bearer context may be identified by a second unique Temporary Mobile Group Identity.;
- it may be arranged for using first bearer contexts of a cellular bidirectional communication network forming the wireless communication network;
- it may be arranged for using second bearer contexts of a DVB-H network extension forming the digital broadcasting network extension. In a variant, it may be arranged for using second bearer contexts of a DVB-SH network extension forming the digital broadcasting network extension;
- it may be arranged for providing MBMS (or Multimedia Broadcast Multicast Service) services, or equivalent Mobile WiMAX broadcast services.

The invention also provides a method, intended for controlling, into a BM-SC, broadcasting of services to wireless communication equipments of users, and comprising a step consisting in determining for each service to be broadcast to user wireless communication equipments if it must be broadcast by means of resources of a wireless communication network and through at least one first bearer context and/or by means of resources of a digital broadcasting network extension of this wireless communication network, that have been allocated to the BM-SC, and through at least one second bearer context, depending on at least one chosen parameter of a policy and of the coverage of at least the digital broadcasting network extension.

### Brief description of the figures

Other features and advantages of the invention will become apparent on examining the detailed specifications hereafter and the appended drawings, wherein:
- figure 1 schematically and functionally illustrates a wireless communication network with a digital broadcast network extension and to which is connected a BM-SC according to the invention, which is itself connected to a content source,
- figure 2 is a diagram illustrating successive phases of an example of MBMS activation according to the invention, in a 3G network,
- figure 3 is a diagram illustrating successive phases of an example of MBMS deactivation according to the invention, in a 3G network, and
- figure 4 is a diagram illustrating successive phases of an example of MBMS activation according to the invention, in a 4G network.

### Detailed description of the preferred embodiment

The appended drawings may serve not only to complete the invention, but also to contribute to its definition, if need be.

The invention aims at offering a Broadcast Multicast - Service Centre (hereafter called BM-SC), and associated method and communication system, intended for broadcasting service(s) to users of wireless communication equipments (E1i, E2j) through a wireless communication network and/or a (wireless) digital broadcasting network extension of this wireless communication network.

In the following description it will be considered that the wireless communication network is a cellular (or mobile) bidirectional network, such as an UMTS or CDMA 2000 or GSM or else LTE ("Long Term Evolution") network, for instance. But the invention is not limited to this type of wireless communication network. Indeed, a wireless communication network may be also a bidirectional wireless communication networks not having yet a multicast distribution service, such as WiFi or Mobile WiMAX. Hereafter it is considered as example that the cellular network is an UMTS network.

Moreover in the following description it will be considered that the digital broadcasting network extension of the wireless communication network is a DVB-H extension (i.e. a mobile video broadcast extension - described in ETSI EN 302304). But the invention is not limited to this type of (wireless) digital broadcasting network extension. Indeed, a (wireless) digital broadcasting network extension can be also a DVB-SH extension (i.e. a satellite extension), or a DVB-T2 extension, or a S-DMB extension, or the ETSI SDR extension, or else a T-DMB extension, for instance.

Moreover in the following description, the term "service" will refer, as a non limiting example, to an audiovisual content suitable for multicast or broadcast delivery, and particularly, in this description (given as non limiting example), by the Multimedia Broadcast Multicast Service (or MBMS - described in 3GPP TS 23.246 V8.1.0.). But it is clear that the invention is not limited to this definition. Indeed, the invention is applicable to any type of digital information flow allowing to transmit content data and/or signaling information to wireless communication equipments. So, it may be a content distribution, such as television (TV) channel(s), radio channel(s) or a video on demand (or VoD), but also a software delivery service providing games, polls or rich media applications, for instance.

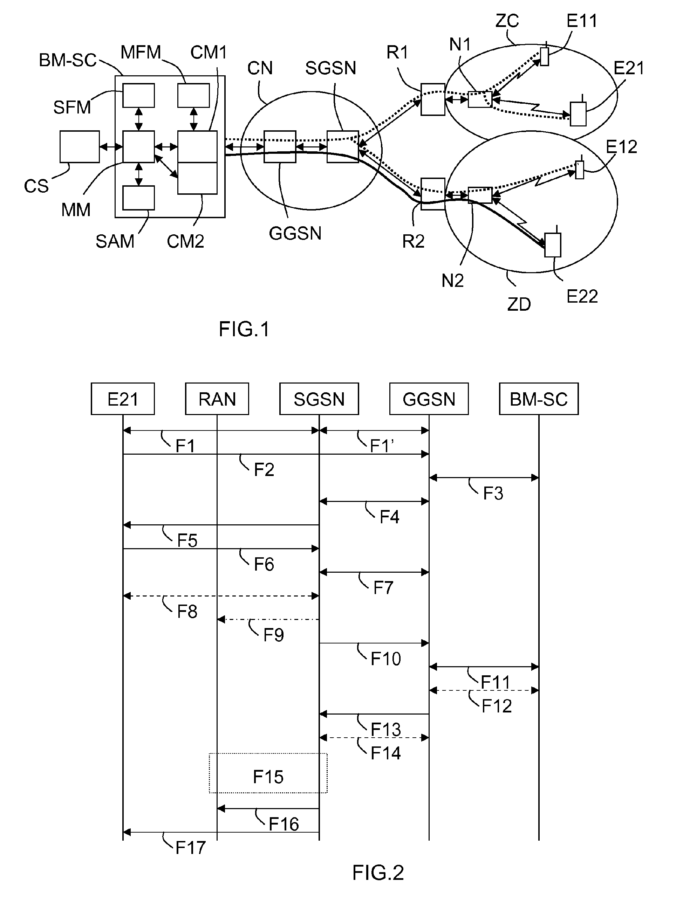

Figure 1 illustrates schematically a communication system comprising a wireless communication network (here of the cellular type) CN, Rk, Nk, with a (wireless) digital broadcast network extension (here of the DVB-H type), and a BM-SC according to the invention, connected to the cellular network (and more precisely to its core network CN).

The BM-SC is connected to a content source CS in order to be provided with contents that must be broadcast through services to user wireless communication equipments E1i and E2j, hereafter called user equipments. For instance, the contents to be broadcast are TV programs that belong to TV channels. But it could be also videos of a service of video on demand (or VoD), for instance.

The cellular network can be very schematically sum up, as illustrated, in a core network CN, comprising notably nodes of the GGSN and SGSN types and connected to a radio access network (called UTRAN in the case of an UMTS network), comprising notably radio network controllers Rk (called RNCs in the case of an UMTS network) and access points Nk (called Node Bs in the case of an UMTS network).

As illustrated the radio network controllers Rk are connected to a SGSN of the core network CN and each serve a cell (or coverage area) ZC or ZD in which user equipments E1i, E2j may receive and transmit data through at least one Node B Nk. It is recalled that a radio network controller Rk is connected to (and serves) at least one Node B Nk which is a radio network equipment of the radio access network.

In the non limiting example illustrated in figure 1, only two radio network controllers Rk (k = 1 or 2) have been drawn, and each of them is connected to only one Node B Nk. But, a cellular network generally comprises much more radio network controllers Rk than two, and each of them can be connected to several Node Bs Nk.

For instance, the first radio network controller R1 serves a coverage area ZC that can receive at least one given (MBMS) service via the only cellular network, while the second radio network controller R2 serves a coverage area ZD that can receive the same given (MBMS) service via the cellular network and its digital broadcasting network extension (here DVB-H). So, the first radio network controller R1 and its associated Node B N1 are classical single mode network equipments, while the second radio network controller R2 and its associated Node B N2 are single mode network equipments which are also capable of signaling the presence of the DVB-H coverage. It is important to note that the DVB-H transmitter(s) that serve(s) the coverage area ZD is/are independent wireless network equipment(s) having some bandwidth reserved for (MBMS) service but which is/are not illustrated in the figure for clarity purpose.

Two types of user equipments may coexist. A first type comprises classical single mode user equipments E1i (here i = 1 or 2) which are only capable of being connected to the cellular network. A second type comprises dual mode user equipments E2j (here j = 1 or 2) which are capable of being connected to the cellular network and to its digital broadcasting network extension (here DVB-H).

In the following description it will be considered that the user equipments E1i and E2j are mobile or cellular telephones. But the invention is not limited to this type of user equipment. Indeed, a user equipment may be also a personal digital assistant (PDA) or a laptop comprising a communication modem (or any equivalent communication means), or else a residential gateway, for instance.

Before describing the invention in details, one recalls hereafter some technical information that will be useful to its understanding:
- the BM-SC is an entry point for the delivery of multimedia services. It can thus leverage the capabilities of different wireless technologies and complement one wireless technology with the other;
- the DVB-H transmit capability is used to support MBMS distribution and is steered in a centralized manner by the BM-SC. MBMS services transported by DVB-H are signaled similarly to other MBMS services by the cellular network. These services can be described into information of an electronic service guide (or ESG), which is transmitted through the cellular network by means of a protocol such as SDP or USBD. This service information is also received by the BM-SC which allows it to estimate the bit rate required to transport the (MBMS) services. Moreover this service information may be static or changing during the service lifetime;
- the control plane carries the signaling information while the user plane carries the data to be broadcast;
- a first bearer context, hereafter called MBMS bearer context, is created for each MBMS service to distribute it through the cellular network to at least one mobile user equipment E1 i or E2j present in one of its coverage area ZC or ZD. This MBMS bearer context is created and used for several signaling operations taking place in the control plane. It is also used in the user plane for carrying the content data. Each MBMS bearer context is identified by its unique Temporary Mobile Group Identity (or TMGI) from the BM-SC to an user equipment E1 i or E2j.

The invention proposes a new type of BM-SC, such as the one illustrated in figure 1 as example of embodiment.

This BM-SC comprises notably a management means (or module) MM which is also called (session and transmission function module). This management module MM is arranged for determining for each (MBMS) service if it must be broadcast by means of resources of the cellular network and through at least one first bearer context and/or by means of resources of the digital broadcasting network extension of this cellular network and through at least one second bearer context, depending on at least one chosen parameter (or criteria) of a chosen policy and of the coverage of at least this digital broadcasting network extension.

It is important to note that some predefined resources are allocated to the BM-SC, and the latter can decide to use only a chosen part of these resources, or all of them, for broadcasting a service.

For instance, the BM-SC has access to a table defining each coverage area (or cell) ZD of the digital broadcast network extension (DVB-H), which allows it to avoid duplicating the broadcasting of content data over the cellular network where DVB-H can be used alone.

The (second) DVB-H bearer context has specific characteristics that make it different from its associated traditional (first) MBMS context bearer:
- its radio bearer information identifies a DVB-H physical channel which is defined by a chosen mode (2K, 4K or 8K, for instance) and a bandwidth,
- it does not carry content data inside the cellular network, but uses the DVB-H extension (or broadcast overlay network) for that,
- it is used for transmitting signaling information (in the control plane) through the cellular network and service (or content) data through the DVB-H extension, and can be exchanged between cellular network nodes.

A (second) DVB-H bearer context being a context on its own, it has preferably its own TMGI.

So, the invention proposes to use two independent bearer contexts (and associated distribution trees) to signal services carried over the cellular network and its DVB-H extension, respectively. In figure 1, the dotted line defined between the BM-SC and user equipments E1i and E2j represents the service distribution tree which is associated with a (first) MBMS bearer context using the cellular network for data transport, while the full line represents the service distribution tree which is associated with a (second) DVB-H bearer context using the DVB-H extension for data transport. These two distribution trees carrying the same MBMS service, it is preferable that they share the same session identifier (ID) and the same multicast address. The MBMS bearer context and the associated DVB-H bearer context start and stop simultaneously from the MBMS service's point of view, but from the user equipment side up to the GGSN, they are managed independently by the management module MM of the BM-SC.

If the management module MM of the BM-SC decides that a MBMS service must be transmitted over the cellular network, its BM-SC signals it in the usual way to the user equipment(s) E1i, E2j. If the management module MM of the BM-SC decides that a MBMS service must be transmitted over the DVB-H extension, its BM-SC signals it in a new way to the user equipment(s) E1i, E2j. In fact, the MBMS service signaling is extended to be able to inform the user equipment(s) E1i, E2j that a DVB-H physical link is being used. Now, if the management module MM of the BM-SC decides that a MBMS service must be transmitted both over the cellular network and its DVB-H extension, its BM-SC signals it to the user equipment(s) E1i, E2j through the MBMS service signaling. This allows to broadcast simultaneously the concerned MBMS service via the normal cellular transmission path and the DVB-H transmission path to serve not only the user having a dual mode user equipment E2j but also the users having a single mode user equipment E1i (and therefore does not have a DVB-H reception capability).

When a MBMS service is being served only to the cellular network, there is only one normal first bearer context initiated by the BM-SC for that service. So, the service data and signaling go through the cellular network.

When a MBMS service is being served only to the DVB-H extension, there is only one second bearer context for that service. So, the service data go through the DVB-H extension and signaling goes through the cellular network.

Now if a MBMS is being served simultaneously to the cellular network and the DVB-H extension, then there are a first bearer context and a second bearer context setup by the BM-SC.

As illustrated, the BM-SC may comprise a first control means (or module) CM1, also called "proxy and function transport function module", coupled to its management module MM and intended for transmitting, to the cellular network, the signalisation information which is relative to a MBMS service to be broadcast through the MBMS and/or DVB-H bearer contexts to user equipments E1 i, E2j, and the service data that must be broadcast to these user equipments E1i, E2j through the MBMS bearer context. This first control module CM1 interacts with the core network CN to signal services transmitted over the DVB-H extension and services transmitted over the cellular network, when the MBMS and DVB-H bearer contexts are setup.

Also as illustrated, the BM-SC may comprise a second control means (or module) CM2, also called "extension transport function module", coupled to its management module MM and intended for transmitting, to the DVB-H extension the service data that must be broadcast to user equipments E1i, E2j through the DVB-H bearer context.

Also as illustrated, the BM-SC may possibly comprise a security function module SFM coupled to its management module MM and intended for managing secured transactions with the user equipments E1i, E2j (http, MIKEY/UDP...).

Also as illustrated, the BM-SC may possibly comprise a membership function module MFM coupled to its first control module (or proxy and function transport function module) CM1, and intended for granting authorization and user charging.

Also as illustrated, the BM-SC may comprise a service announcement function module SAM coupled to its management module MM and intended for transmitting the service information (or electronic service guide (ESG)) to the user equipments E1 i and E2j and to its management module MM.

Each parameter (or criteria), of the policy that is used for determining the broadcasting path(s) of a MBMS service, can be chosen from a group comprising at least:
- the MBMS service requirements, notably in terms of data bit rate,
- the usual audience of the MBMS service,
- the MBMS service broadcasting quality (for instance low or high definition),
- the class to which belong the users that are supposed to be interested by the MBMS service, for instance gold or silver,
- the capability of the user equipments E1 i, E2j of the users that are interested by the MBMS service,
- the number of users to which the MBMS service can be broadcast into at least one coverage area ZD of the DVB-H extension,
- the number of users to which the MBMS service can be broadcast into at least one coverage area ZC or ZD of the cellular network,
- the size of at least one coverage area ZD of the DVB-H extension which can be used for broadcasting the MBMS service,
- the size of at least one coverage area ZC or ZD of the cellular network which can be used for broadcasting the MBMS service, and
- the radio resources available for MBMS services in the cellular network, and/or in the DVB-H extension.

Any type of policy can be used by the management module MM to determine the broadcasting path(s) to be used for broadcasting a MBMS service. For instance, it is possible to decide to broadcast the MBMS service(s) with the highest usual audience over the DVB-H extension and the other MBMS services over the cellular network, and/or the MBMS service(s) requiring the highest data bit rate over the DVB-H extension and the other MBMS services over the cellular network. It is also possible to decide to broadcast the MBMS service(s) in the coverage area ZC or ZD which comprises the biggest number of users at the considered instant.

It is important to note that several network equipments and the dual mode user equipments E2j needs to be adapted in order to support the use of the DVB-H bearer context(s) in addition to the "normal" MBMS (cellular) bearer context. These nodes are the radio network controllers Rk, the SGSN(s) and the GGSN(s), notably.

Moreover, the MBMS procedures are changed to leverage DVB-H where available and when the user equipments E2j support it. These MBMS procedures are defined by the 3GPP standard in 3GPP TS 23.246 v8.1.0. Some of these modified MBMS procedures are detailed hereafter with reference to figures 2 to 4.

An example of modified MBMS activation procedure is illustrated in figure 2. This procedure begins when a dual mode user equipment E21 joins a multicast group. This requires exchanges of classical messages between this user equipment E21 and the SGSN and between the SGSN and the GGSN (PDP Context Activation - arrows F1 and F1'), and a transmission of a classical message (IGMP join - arrow F2) between the user equipment E21 and the GGSN.

Then there are exchanges of classical authorization messages between the GGSN and the BM-SC (MBMS Authorization Request and Response - arrow F3) and classical exchanges of notification messages between the GGSN and the SGSN (MBMS Notification Request and Response - arrow F4).

Then there is a transmission of a classical message (Request MBMS Context Activation - arrow F5) between the SGSN and the user equipment E21, followed by a modified message (Activate MBMS Context Request - arrow F6) between the user equipment E21 and the SGSN. This last message needs to be modified to allow the user equipment E21 to transmit its DVB-H capability when the BM-SC does not know it.

Then there are exchanges of classical messages between the SGSN and the GGSN (MBMS Notification Reject Request and Response - arrow F7) and possibly classical exchanges of security messages between the SGSN and the user equipment E21 to apply security functions (arrow F8). The SGSN may also transmit a message (Invoke Trace - arrow F9) to the RAN (radio access network) in order to invoke a trace. It is recalled that tracing is a kind of logging which can be used for maintenance purpose.

When the MBMS context activation is done, the SGSN may request a context creation from the GGSN (Create MBMS Context Request with DVB-H capability of the user equipment E21 - arrow F10) in case where this DVB-H capability can not be determined by the BM-SC. In this case, the GGSN requests authorization for the user equipment E21 from the BM-SC, by signaling its capability to receive DVB-H (MBMS Authorization Request with DVB-H capability - arrow F11), and the BM-SC gives an authorization (or not) by transmitting a message to the GGSN (MBMS Authorization Response - arrow F11). Alternatively, the BM-SC can determine the capability to receive DVB-H for any user equipment E1i, E2j without extra signaling when this capability information is stored into a network equipment, such as the HSS (Home Subscriber System), upon receipt of an authorization request. This is at this stage that the BM-SC determines whether the user equipment E21 can be served or not via the DVB-H extension. Two conditions must be met in order the BM-SC authorizes the user equipment E21 to receive the requested service via the DVB-H extension: this requested MBMS service is already transmitted via DVB-H in the cell where the user equipment E21 is temporarily present, and the user equipment E21 must have a DVB-H reception capability.

Then the GGSN and the BM-SC exchange registration messages (MBMS Registration Request and Response - arrow F12) in order the BM-SC is notified by the GGSN of the fact that it wishes to be added to the requested MBMS service's distribution tree. In current 3G networks, this operation is done only when the first user equipment registers for a given service, triggering the creation of a bearer context. By contrast, in the invention, two independent distribution trees are setup in the form of two separate bearer contexts (MBMS and DVB-H). If the DVB-H reception is possible, then a DVB-H bearer context can be setup (if it has not been yet setup and assuming that the BM-SC has decided to use the DVB-H extension bandwidth for the service). Otherwise, a normal MBMS bearer context is setup (if it has not been yet setup). If no TMGI has been allocated for this DVB-H bearer context, the BM-SC allocates a new TMGI. This TMGI will be passed to GGSN and SGSN via the MBMS Registration Response message and later on to the user equipment E21 via an Activate MBMS Context Accept message (arrow F17).

If the MBMS service is already started when the GGSN creates the new context then the GGSN additionally executes a MBMS start procedure described below.

Following that, the GGSN informs the SGSN about the context creation (Create MBMS Context Response - arrow F13), and the SGSN registers into the distribution tree by exchanges of messages with the GGSN (MBMS Registration Request and Response - arrow F14). Two separate distribution trees may be setup, one for the DVB-H broadcasting and another one for the cellular broadcasting. If the service is already started then the SGSN additionally executes a MBMS start procedure.

Then the selected transmission means is communicated to the RAN (F15). The SGSN may also possibly transmit a message (Invoke Trace - arrow F16) to the RAN in order to invoke a trace (tracing can be used as usual in 3GPP core network). Finally the SGSN transmits a message to the user equipment E21 to inform it that an activation of a MBMS has been accepted (Activate MBMS Context Accept - arrow F17).

An MBMS start procedure is initiated by the BM-SC when the MBMS session is about to start and propagated to the registered downstream nodes (GGSN, SGSN and RAN) according to the distribution tree(s). According to the invention, the BM-SC can initiate the procedure simultaneously for two bearer contexts (legacy MBMS and DVB-H), identified by their respective TMGIs. The topology of the DVB-H and cellular distribution trees may be different. The effect of the start procedure is to set the state of the concerned bearer context to "Active". In the RAN, the start procedure triggers the transmission of scheduling and radio bearer information for the concerned MBMS service. After the MBMS start procedure has been executed (in the control plane), the transmission of the concerned MBMS service data may begin (in the user plane). For a traditional MBMS bearer context, the service data flows through the core network CN, thus there is an additional resource allocation operation taking place in the RAN. For a DVB-H bearer context the MBMS start procedure is pure signaling. The MBMS service data are sent over the DVB-H extension.

An MBMS stop procedure is initiated by the BM-SC and releases the bearer resources for the MBMS session down the distribution tree(s). As a MBMS session may involve a cellular bearer context and a DVB-H bearer context, the BM-SC must stop both of them. For a cellular bearer context this MBMS stop procedure also releases the radio resources. For a DVB-H bearer context this MBMS stop procedure involves only signaling.

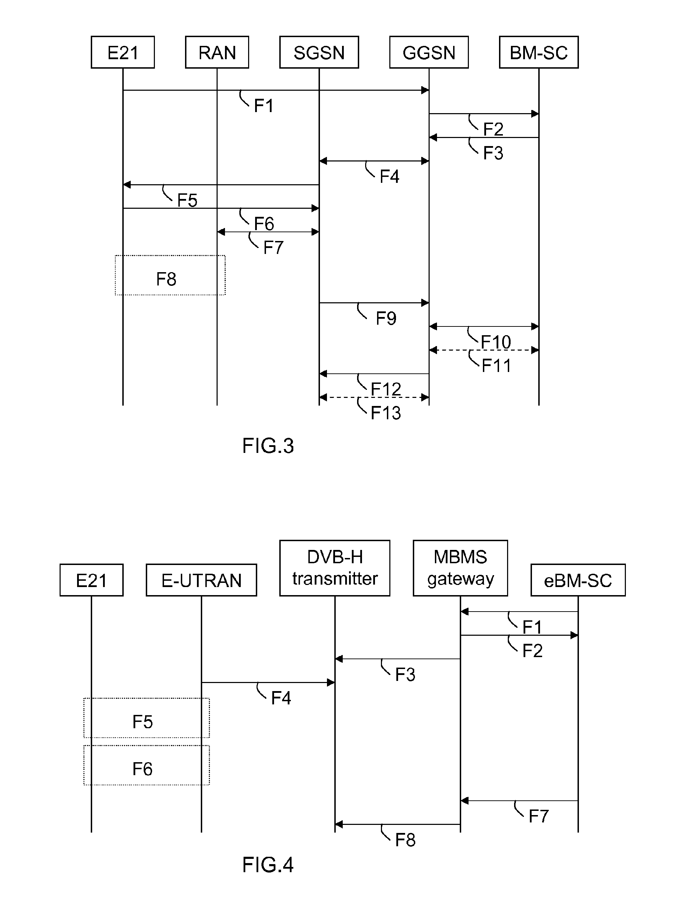

An example of modified MBMS deactivation procedure is illustrated in figure 3. The MBMS deactivation is the procedure used by an user equipment E21 to signal that it is not willing to receive a given MBMS service anymore. The user equipment E21 is removed from the MBMS bearer context. In the present invention, the user equipment E21 must be removed from the appropriate context (DVB-H or cellular). If the user equipment E21 was the last one receiving the concerned MBMS service, then each associated bearer context must be released. Two cases must be considered: if the user equipment E21 was the last one taking part in a DVB-H bearer context, the latter must be released, and if the user equipment E21 was taking part in a cellular bearer context, the latter must be released.

This MBMS deactivation procedure can be done as follows. Firstly the user equipment E21 transmits a classical IGMP Leave message to the GGSN (arrow F1). Then the GGSN transmits a classical Leave Indication message to the BM-SC (arrow F2). Then the BM-SC transmits a classical UE (user equipment) Removal Request message to the GGSN (arrow F3). Then the GGSN and the SGSN exchange classical MBMS UE Context Deactivation Request message and MBMS UE Context Deactivation Response message (arrow F4). Then the SGSN and the user equipment E21 exchange classical Deactivate MBMS Context Request message (arrow F5) and Deactivate MBMS Context Response message (arrow F6). Then the SGSN and the RAN exchange classical MBMS UE De-Linking Request message and MBMS UE DE-Linking Response message (arrow F7). Then the RAN proceeds to a resource release (F8). Then the SGSN transmits a classical Delete MBMS Context Request message to the GGSN (arrow F9). Then the GGSN and the BM-SC exchange classical Deactivation Indication message and Deactivation Confirmation message (arrow F10). Then the GGSN and the BM-SC exchange MBMS Deregistration Request message and MBMS Deregistration Response message (arrow F11). Then the GGSN transmits a classical Delete MBMS Context Response message to the SGSN (arrow F12). Finally the SGSN and the GGSN exchange classical Deregistration Request message and Deregistration Response message (arrow F13).

A modified MBMS user equipment (UE) context synchronization procedure can be triggered by a routing area update procedure when an user equipment E21 changes its location (or routing area (RA)). In this case the user equipment E21 sends its current MBMS UE context list (i.e. the list of MBMS services it is receiving) to the SGSN into a Routeing Area Update Request message. Each context which is not active in the new routing area on the SGSN's side must be deactivated by the user equipment E21 (to this effect, the SGSN transmits a Routeing Area Update Accept message to the user equipment E21. If the user equipment E21 wishes to continue receiving a MBMS service whose context has been deactivated, it must join this MBMS service again. For this purpose, the invention proposes that the routing areas be defined so that they are either entirely covered by DVB-H extension(s) or solely covered by the cellular network. Thus when an user equipment changes its routing area it re-initiates the activation procedure and can switch between reception modes.

A MBMS session update procedure can be initiated by the BM-SC when the service area for an ongoing MBMS broadcast service session must be modified. This procedure can be used to inform the user equipments that a DVB-H transmission of a given MBMS service is about to be stopped in a selected area. In this case, user equipments that wish to continue receiving this MBMS service must activate it again, which will result in their insertion into the cellular bearer context's distribution tree. This feature is particularly useful to achieve dynamic allocation of DVB-H bandwidth.

The procedures described above are implemented by means of signaling protocols. It is recalled that signaling between the core network CN and the UTRAN (in case of a cellular UMTS network) is done with the RANAP protocol, and signaling in the UTRAN is done with the RRC protocol.

The invention introduces minimal changes to the signaling in the UTRAN. Most of the changes are done in the core network CN where two separate bearer contexts (MBMS and DVB-H) must be managed for a given MBMS service. In the UTRAN, the modification simply consists in announcing the DVB-H transmission parameters for a DVB-H bearer context.

RANAP protocol has a set of special functions for MBMS which must be enhanced to enable signaling the availability of some services via DVB-H.

A first function is the MBMS RAB management. This function is responsible for setting up, updating and releasing the MBMS RAB as well as the MBMS Iu interface which signals connection corresponding to one MBMS session. The MBMS RAB is defined for the core network (CN) packet switched (PS) domain only. For MBMS services served over a DVB-H extension, this function informs the RAN about the availability of the service via the DVB-H extension (with a different TMGI) in certain areas. The invention proposes that the DVB-H coverage area (which is known by the BM-SC) be signaled in the core network CN as a set of routing areas.

A second function is the MBMS core network (CN) packet switched (PS) domain de-registration. This function makes a radio network controller Rk aware that a given multicast service is no longer available.

A third function is the MBMS user equipment (UE) linking/de-linking. This function makes a radio network controller Rk aware that a given user equipment, with existing lu-ps signaling connection, has joined/left some multicast service(s). This is mainly useful when a MBMS service is served over a 3G network to optimize radio resources. For the DVB-H extension this information can be used to reconfigure the routing of services between the DVB-H extension and the associated 3G network.

A fourth function is the requesting MBMS service registration/de-registration. Because the overall MBMS core network (CN) de-registration is a function of the core network (CN) packet switched (PS) domain, a radio network controller Rk has the capability to register/de-register to a specific multicast service. For a MBMS service served via a DVB-H extension, this fourth function is not used.

The communication between a radio network controller Rk and an user equipment is realized by means of several physical, transport and logical channels. In the cells where MBMS services are available, announcement information is carried over a logical channel called BCCH. So, an information element (MBMS SYSTEM INFORMATION) is repeatedly broadcast over the BCCH. This information carries the MCCH schedule information (there is only one MCCH per cell, which is sent periodically) and the configuration of the radio bearer carrying the MCCH.

A MBMS SERVICE INFORMATION is an information element which is transmitted periodically over the MCCH to indicate the status of MBMS services. This information contains MBMS session identifiers, MBMS service identifiers (which are similar to the TMGIs) and whether these services are being transmitted (either in point-to-point or point-to-multipoint) or available if an user equipment requests them. In case the transmission takes place in point-to-multipoint mode the user equipment needs to receive the MBMS RADIO BEARER INFORMATION to discover the transmission parameters. In the present invention, when the same service (i.e. with the same MBMS session identifier) is transmitted over the cellular network and its associated DVB-H extension in the same cell, there is two different MBMS service identifiers (or TMGIs) in order to allow the user equipment to retrieve the appropriate radio bearer information for the considered MBMS service.

A MBMS RADIO BEARER INFORMATION is an information element which is transmitted periodically over the MCCH to inform the user equipments about the MTCH radio bearer which is used to transmit the MBMS services served in point-to-multipoint mode. It includes MBMS Service identifier, radio bearer, transport channel and physical channel information per MBMS service. This signaling flow is applicable for handling MBMS to user equipments in idle mode and PMM-CONNECTED mode (i.e. user equipments already connected to another service in the UTRAN). To support DVB-H transmission, the structure of this information element must be extended with DVB-H transmission parameters.

The re-counting mechanism is unchanged for a DVB-H bearer context. So, for user equipments in idle mode or URA_PCH, CELL_PCH or CELL_FACH state, the CRNC ("Controlling Radio Network Controller") can request user counting by sending a MBMS ACCESS INFORMATION over the MCCH. This information includes, for each MBMS service for which counting is required, the MBMS service identifier and a probability factor.

It is important to note that the invention applies also to a 4G network.

In a 4G network, MBMS sessions are setup using a MBMS start procedure and released by a MBMS stop procedure. These procedures are used to signal DVB-H parameters to the user equipments. The invention proposes to add the DVB-H parameters to the MBMS start and stop procedures that are used to signal a cellular MBMS service. Alternatively, separate messages could be used to signal the DVB-H service independently from the cellular service, for instance by reusing the same session identifier (ID). An example of modified MBMS start procedure adapted to a 4G network is illustrated in figure 4.

First, it is recalled that in a 4G network the BM-SC is called eBM-SC, the radio access network may be called E-UTRAN, and there exists a MBMS gateway in charge of the management of the MBMS services and DVB-H transmitters (or similar wireless network equipments).

The eBM-SC has to notify the MBMS Gateway about the start of a MBMS session, providing the session attributes (QoS (quality of service), MBMS service area, session identifier, estimated session duration, but also another additional area defining the DVB-H extension coverage with the associated DVB-H transmission parameters) (Session Start Request message - arrow F1). The MBMS Gateway responds to the eBM-SC by transmitting a Session Start Response message (arrow F2) to it.

All these parameters are sent by the MBMS Gateway to the E-UTRAN by means of a message (Session Start Request - arrow F3), and the E-UTRAN responds to the MBMS Gateway by transmitting a Session Start Response message (arrow F4) to it.

Then the E-UTRAN announces the availability of the service over the DVB-H extension to user equipments E1 i, E2j by means of a control channel as in the UTRAN case (F5).

Then an user equipment E2j can join the multicast group concerned by the MBMS service. To this effect, it has to indicate if it supports DVB-H reception (F6). In parallel, MBMS data are sent by the eBM-SC to the MBMS gateway (arrow F7) then to each concerned DVB-H transmitter (arrow F8).

It is important to note that the invention can also be considered in terms of a method for controlling, by means of a (and therefore into) BM-SC, broadcasting of services to wireless communication equipments E1i, E2j of users. Such a method may be implemented by means of a communication system such as the one above described with reference to figure 1. Therefore, only its main characteristics will be mentioned hereafter.

The method according to the invention comprises a step consisting in determining for each service to be broadcast to user wireless communication equipments E1 i, E2j if it must be broadcast by means of resources of a wireless communication network and through at least one first bearer context and/or by means of resources of a digital broadcasting network extension of this wireless communication network E1i, E2j, that have been allocated to the BM-SC, and through at least one second bearer context, depending on at least one chosen parameter of a policy and of the coverage of at least this digital broadcasting network extension.

The invention is not limited to the embodiments of Broadcast Multicast - Service Centre, method and communication system described above, only as examples, but it encompasses all alternative embodiments which may be considered by one skilled in the art within the scope of the claims hereafter.

## Claims

1. Broadcast Multicast - Service Centre (BM-SC) intended for using cellular resources of a wireless communication network (CN, Rk, Nk) for broadcasting services to wireless communication equipments (E1i, E2j) of users through first bearer contexts, **characterized in that** it comprises a management means (MM) arranged for determining for each service if said service must be broadcast:
- by means of resources of said wireless communication network (CN, Rk, Nk) and through at least one first bearer context and/or
- by means of resources of a digital broadcasting network extension of said wireless communication network (CN, Rk, Nk), that have been allocated to said Broadcast Multicast - Service Centre (BM-SC), and through at least one second bearer context, depending on at least one chosen parameter of a policy and of the coverage of at least said digital broadcasting network extension.

2. Broadcast Multicast - Service Centre according to claim 1, **characterized in that** each parameter is chosen from a group comprising at least:
- the service requirements,
- the usual audience of a service,
- the service broadcasting quality,
- a class to which belong users interested by a service,
- the capability of the wireless communication equipments (E1i, E2j) of users interested by a service,
- the number of users to which a service can be broadcast into at least one coverage area of the digital broadcasting network extension,
- the number of users to which a service can be broadcast into at least one coverage area of the wireless communication network (CN, Rk, Nk),
- the size of at least one coverage area of the digital broadcasting network extension that can be used for broadcasting a service,
- the size of at least one coverage area of the wireless communication network (CN, Rk, Nk) that can be used for broadcasting a service,
- the radio resources available for services in the wireless communication network (CN, Rk, Nk) and/or in the digital broadcasting network extension.

3. Broadcast Multicast - Service Centre according to one of claims 1 and 2, **characterized in that** it is arranged for allocating a same session identifier and a same multicast address to a service broadcast by said wireless communication network (CN, Rk, Nk) and said digital broadcasting network extension.

4. Broadcast Multicast - Service Centre according to one of claims 1 to 3, **characterized in that** it comprises a first control means (CM1) arranged for transmitting to said wireless communication network (CN, Rk, Nk) i) signalisation information relative to said service to be broadcast to the user wireless communication equipments (E1i, E2j) through said first and/or second bearer contexts, and ii) service data to be broadcast to said user wireless communication equipments (E1i, E2j) through said first bearer context.

5. Broadcast Multicast - Service Centre according to one of claims 1 to 4, **characterized in that** it comprises a second control means (CM2) arranged for transmitting to said digital broadcasting network extension service data to be broadcast to said user wireless communication equipments (E1i, E2j) through said second bearer context.

6. Broadcast Multicast - Service Centre according to one of claims 1 to 5, **characterized in that** each first bearer context is identified by a first unique Temporary Mobile Group Identity and each second bearer context is identified by a second unique Temporary Mobile Group Identity.

7. Broadcast Multicast - Service Centre according to one of claims 1 to 6, **characterized in that** it is arranged for using first bearer contexts of a cellular bidirectional communication network forming said wireless communication network (CN, Rk, Nk).

8. Broadcast Multicast - Service Centre according to one of claims 1 to 7, **characterized in that** it is arranged for using second bearer contexts of a DVB-H network extension forming said digital broadcasting network extension.

9. Broadcast Multicast - Service Centre according to one of claims 1 to 7, **characterized in that** it is arranged for using second bearer contexts of a DVB-SH network extension forming said digital broadcasting network extension.

10. Broadcast Multicast - Service Centre according to one of claims 1 to 9, **characterized in that** it is arranged for providing MBMS services.

11. Method for controlling, into a Broadcast Multicast - Service Centre (BM-SC), broadcasting of services to wireless communication equipments (E1i, E2j) of users, **characterized in that** it comprises a step consisting in determining for each service to be broadcast to user wireless communication equipments (E1i, E2j) if it must be broadcast by means of resources of a wireless communication network (CN, Rk, Nk) and through at least one first bearer context and/or by means of resources of a digital broadcasting network extension of said wireless communication network (E1i, E2j), that have been allocated to said Broadcast Multicast - Service Centre (BM-SC), and through at least one second bearer context, depending on at least one chosen parameter of a policy and of the coverage of at least said digital broadcasting network extension.
